# EUROPÄISCHE PATENTSCHRIFT

(11) **EP 1 811 195 B1**
(45) Veröffentlichungstag und Bekanntmachung des Hinweises auf die Patenterteilung: **26.11.2008**
(21) Anmeldenummer: 06012219.9
(22) Anmeldetag: 14.06.2006
(51) Int. Cl.: F16F 1/387

(54) **Gelenklager, insbesondere zur Lagerung von Achslenkern in Kraftfahrzeugen**
Pivot bearing, especially for the axle pivot steering of a motor vehicle
Joint articulé, en particulier pour un guide d'essieu de véhicule automobile

(30) Priorität: 19.01.2006 DE 202006000820 U
(43) Veröffentlichungstag der Anmeldung: 25.07.2007
(73) Patentinhaber: Jörn GmbH, 71336 Waiblingen (DE)
(72) Erfinder: Zawadzki, Bernd, 71409 Schwaikheim (DE)
(74) Vertreter: Liebl, Thomas

(56) Entgegenhaltungen:
- EP-A- 1 103 739
- EP-A1- 0 544 112
- EP-A2- 0 819 556
- DE-A1- 2 144 507
- DE-A1- 3 601 506
- DE-A1- 3 715 360
- US-A- 3 147 964

## Beschreibung

Die Erfindung betrifft ein Gelenklager, insbesondere zur Lagerung von Achslenkern in Kraftfahrzeugen nach dem Oberbegriff des Anspruchs 1.

Ein bekanntes gattungsgemäßes Gelenklager (DE-OS 21 44 507) umfasst ein metallisches, balliges Lagerinnenteil als erstes Lagerteil mit wenigstens einem abstehenden Anschlussteil und ein metallisches Gehäuse als zweites Lagerteil, das einen zylindrischen Innenraum als Aufnahmeauge aufweist. Zwischen dem Lagerinnenteil und dem Aufnahmeauge ist ein Elastomerkörper angebracht, der den balligen Bereich des Lagerinnenteils übergreift und welcher axial zwischen beidseitigen Stützringen vorgespannt ist, wobei die Stützringe einen Außendurchmesser entsprechend dem Innendurchmesser des Aufnahmeauges aufweisen.

Das Lagerinnenteil ist hier kugelig ausgeführt. Entsprechend ist auch der umgebende Elastomerkörper als Gummihohlkörper mit innen und außen kugeligen Flächen ausgeführt mit zwei anvulkanisierten, metallischen Kugelkalotten als Stützringe, wobei der Gummihohlkörper radial zu zwei Lagerhalbschalen geteilt ist. Durch axiales Zusammenziehen dieser Kugelkalotten bzw. dieser Stützringe sind die Lagerhalbschalen an das Innenteil anpressbar, wodurch sich im Elastomermaterial eine Vorspannung ergibt. Im Bereich der Anlagefläche zum Lagerinnenteil sind an den inneren Gummiflächen Innenhülsen aufvulkanisiert mit einem Schlitz an ihrem Stoß und mit einem Gummifilm als Anlagefläche, so dass die Lagerhalbschalen nach dem Zusammenziehen der Kugelkalotten kraftschlüssig durch Reibungshaftung auf dem Lagerinnenteil festgelegt sind. Das Lagerinnenteil bildet hier das eine zu lagernde Teil, beispielsweise mit einer Verbindung zu einem Fahrzeugaufbau und das Aufnahmeauge, das andere zu lagernde Teil, beispielsweise mit einem angeschlossenen Achslenker. Alle Relativbewegungen zwischen diesen beiden Teilen werden molekular in der Gummischicht aufgenommen, wobei keine Gleitbewegungen erfolgen, so dass auch keine Maßnahmen für stirnseitige Lagerabdichtungen erforderlich sind. Bei diesem Gelenklager liegen in allen Radialrichtungen gleichmäßige Verhältnisse vor, so dass bei radialen Auslenkungen eine etwa gleichmäßig, proportional ansteigende Federkennung gegeben ist. Um hohe Lagerabstützkräfte für starke Belastungen und Lagerauslenkungen zur Verfügung stellen zu können, ist ein solches Gelenklager auch für nur geringe Anfangsbelastungen relativ steif auszulegen, so dass eine fahrzeugakustisch unerwünscht gute Kopplung über das Lager erfolgt und zudem der Fahrkomfort reduziert sein kann.

Weiter ist ein elastisches Lager mit in unterschiedlichen Belastungsrichtungen unterschiedlichen Federkennungen bekannt. Dazu sind bei einer Lagerbuchse (US-PS 3,147,964) mit einem zylindrischen Lagerinnenteil und einem zylindrischen Aufnahmeauge und einer dazwischen eingepressten Gummibuchse an deren Umfangsfläche in verschiedenen Segmenten Gummiausnehmungen vorhanden. In diesen Raumrichtungen ist die Federkennung gegenüber anderen Raumrichtungen insgesamt bleibend reduziert, kardanische Auslenkungen sind hier nicht vorgesehen.

Ein bekanntes, relativ verdrehweiches, elastisches Lager mit gestufter Federkennung (DE-OS 36 01 506), das bevorzugt zur Lagerung eines Fahrerhauses eines LKW verwendet wird, enthält eine relativ kurze Gelenkbuchse, die in ein Aufnahmeauge eingepresst ist. Um bei stärkeren Belastungen eine radiale Führung zu erhalten, ist zudem am Lagerinnenteil neben dem Gummiring der Gelenkbuchse ein umlaufender Anschlag als weiterer Gummiring aufvulkanisiert. Dieser ist so bemessen, dass im eingepressten Zustand der Gelenkbuchse ein umlaufender Luftspalt zwischen Anschlag und umgebendem Aufnahmeauge verbleibt. Bei einem radialen Einfederweg größer als der Luftspalt wirkt der Anschlag als zugeschaltete weitere Feder und das Lager wird bei größerer, radialer Belastung sprunghaft härter.

Bei einem weiter bekannten Gelenklager (DE 37 15 360 C2) ist ein hülsenförmiger Elastomerkörper mit im nicht vorgespannten Zustand zylindrischer Umfangsfläche verwendet. Dieser ist in ein im wesentlichen zylindrisches Aufnahmeauge unter Vorspannung eingesetzt. Die Innenfläche des Aufnahmeauges weist in einer mittleren Zone eine umlaufende, zylindrische Materialausnehmung auf, die die Vorspannung des hülsenförmigen Elastomerkörpers in dieser Zone herabsetzt. Dadurch ergibt sich für geringe Lagerauslenkungen eine weichere Federanordnung durch die beiden wirkenden Seitenbereiche, denen eine weitere Feder bei größerer Auslenkung im mittleren Bereich des Aufnahmeauges zugeschaltet wird. Dies führt zu einer weitgehend sprunghaften Änderung in der Federkennung.

Bei einem weiter bekannten Gelenklager (EP 0 544 112 A1) haben axial äußere Stützringe ein Untermaß gegenüber dem Innendurchmesser des Aufnahmeauges. Zudem weist der Elastomerkörper im nicht vorgespannten Zustand, mittig umlaufend eine ballige und beidseitig daneben eine umlaufend taillierte Mantelflächengeometrie auf. Durch diese Mantelflächengeometrie in Verbindung mit dem Untermaß der Stützringe soll die Möglichkeit einer Drehbewegung zwischen dem Innenteil und dem Aufnahmeauge hergestellt werden.

Ein weiter bekanntes Gelenklager (EP 0 819 556 A1) besteht aus einem metallischen, balligen Lagerinnenteil als erstem Lagerteil mit wenigstens einem abstehenden Lageranschlussteil, aus einem metallischen Gehäuse als zweitem Lagerteil, das einen zylindrischen Innenraum als Aufnahmeauge aufweist und aus einem Elastomerkörper zwischen dem Lagerinnenteil und dem Aufnahmeauge, der den balligen Bereich des Lagerinnenteils übergreift. Der Elastomerkörper ist axial zwischen beidseitigen Stützringen vorgespannt, wobei die Stützringe einen Außendurchmesser entsprechend dem Innendurchmesser des Aufnahmeauges aufweisen. Die Umfangsfläche des Elastomerkörpers ist im nicht vorgespannten Zustand in den beiden axialen Seitenbereichen umlaufend etwa zylindrisch geformt und bildet anschließend an die seitlichen Zylinderformen an der Umfangsfläche zur axialen Lagermitte einen sich verjüngenden umlaufenden und über den gesamten Umfang gleich geformten Doppelkonus. Mit einer solchen Ausführungsform sind in allen Radialrichtungen gleiche und radial progressiv ansteigende Federkennungen gegeben.

Aufgabe der Erfindung ist es, ein gattungsgemäßes Gelenklager so weiterzubilden, dass hinsichtlich der Federkennung ein großer Umfang an Dimensionierungsmöglichkeiten und damit eine Anpassung und Abstimmung an konkrete Einsatzfälle zur Verfügung steht.

Diese Aufgabe wird mit den kennzeichnenden Merkmalen des Anspruchs 1 gelöst.

Gemäß Anspruch 1 weist die im übrigen im nicht vorgespannten Zustand zylindrisch geformte Umfangsfläche des Elastomerkörpers in wenigstens einem Umfangsteilbereich eine partielle Elastomerausnehmung auf dergestalt, dass dort die Umfangsfläche nur in den beiden axialen Seitenbereichen etwa zylindrisch geformt ist sowie anschließend an diese seitlichen Zylinderformen zur axialen Lagermitte hin verjüngt ist und eine Doppelkonusform bildet. Zudem sind der Elastomerkörper, das Lagerinnenteil, das Aufnahmeauge und die aufgebrachte Vorspannung so dimensioniert, dass im fertig montierten und nicht eingefederten Zustand des Gelenklagers der Elastomerkörper mit der zylindrischen Umfangsfläche und den seitlichen Zylinderformen im Aufnahmeauge vorgespannt anliegt. In Richtung des Umfangsteilbereichs mit der ausgenommenen Doppelkonusform liegt bei geringen Lagerauslenkungen im Vergleich zu anderen Auslenkrichtungen eine relativ weiche Federkennung vor. Bei stärkeren Lagerauslenkungen in dieser Richtung kommt dagegen der doppelkonische Bereich nach und nach zur Anlage im Aufnahmeauge, was einem progressiven Anstieg der Federkennung bewirkt.

Damit können ohne abrupte Übergänge in relativ weiten Bereichen Dimensionierungen der Federkennung hinsichtlich des Anstiegsverhaltens und/oder bezogen auf vorgebbare Raumrichtungen vorgenommen werden. Damit kann ein solches Gelenklager durch diese weite Variationsmöglichkeit der Federkennung an vorgegebene Einsatzfälle mit verbesserter Optimierung angepasst werden.

Anstelle nur einer ausgenommenen Doppelkonusform können nach Anspruch 2 auch zwei oder mehrere Umfangsteilbereiche mit je einer ausgenommenen Doppelkonusform am Umfang versetzt angeordnet sein, so dass in der jeweils zugeordneten radialen Raumrichtung eine anfänglich reduzierte Federkennung mit progressivem Anstieg vorgesehen werden kann.

Insbesondere können dazu nach Anspruch 3 zwei Doppelkonusformen radial gegenüberliegend, vorzugsweise mit gleicher Ausbildung angeordnet sein. Bei der Verwendung in Verbindung mit einem Achslenker kann dann beispielsweise bei der Anordnung der Doppelkonusformen in einer Horizontalebene eine entsprechend weiche Abstützung mit progressiver Federkennung und in Vertikalrichtung eine dagegen härtere Abstützung vorgesehen sein.

Zum Erhalt eines symmetrischen Lagerverhaltens können nach Anspruch 4 bei zwei oder mehr Doppelkonusformen deren jeweilige Konusform und deren Umfangslänge gleich sein.

Andererseits kann bei Bedarf auch ein in unterschiedlichen Raumrichtungen sehr unterschiedliches Lagerverhalten mit unterschiedlichen Federkennungen erhalten werden, indem gemäß Anspruch 5 bei zwei oder mehr Doppelkonusformen deren jeweilige Konusform, insbesondere deren Konuswinkel und damit deren Ausnehmungstiefe und/oder deren Umfangslänge unterschiedlich dimensioniert werden. Vorzugsweise liegt dazu nach Anspruch 6 bei üblichen Lagergrößen der Konuswinkel des Doppelkonus in einem Bereich zwischen 3° und 15°.

Durch die Doppelkonusform ergeben sich bei größeren radialen Lagerauslenkungen in diese Richtung keine sprunghaften Übergänge für den progressiven Anstieg der Federkennung. Entsprechend wird mit Anspruch 7 vorgeschlagen, dass auch in Umfangsrichtung die ausgenommene Doppelkonusform flach in die anschließende übrige Zylinderform des Elastomerkörpers übergeht. Dies trägt ebenfalls zu einer Vergleichmäßigung des progressiven Anstiegs bei, unter Vermeidung unzulässig hoher Gummibelastungen im Übergangsbereich.

Nach Anspruch 8 sind die seitlichen Zylinderformen an dem wenigstens einen ausgenommenen Umfangsteilbereich mit einem Untermaß im Durchmesser gegenüber dem Innendurchmesser des Aufnahmeauges bzw. dem Außendurchmesser der Stützringe ausgebildet, so dass jeweils eine umlaufende Stufe zwischen einem Stützringumfangsrand und einer Zylinderform gebildet ist. Dadurch entstehen in fertig montierten Zustand zwei gegeneinander axial versetzte und auch gegenüber den axialen äußeren Stützringen etwas versetzte Elastomerwülste im Bereich des ausgenommenen Umfangsteilbereichs, die im Aufnahmeauge vorgespannt anliegen. Bei stärkeren Lagerauslenkungen kommt der Doppelkonische Bereich nach und nach in Verbindung mit einem progressiven Anstieg der Federkennung zur Anlage. Eine solche Stufe soll nach Anspruch 9 vorzugsweise eine relativ geringe Höhe von ca. 1 mm aufweisen. Durch eine solche Stufe verbleibt der zugeordnete Eckrandbereich auch bei einer axialen Vorspannung wesentlich weniger belastet, als ohne eine solche Stufe, so dass dort extreme Elastomerbelastungen vermieden und die Lebensdauer des Lagers erhöht werden. Dies ist wesentlich, da im Bereich der Doppelkonusform diese erst nach und nach bei größeren Lagerauslenkungen zur Wirkung kommt und erst dann eine Trag- und Abstützfunktion übernimmt.

In einer funktionsfähigen Ausführungsform kann der Elastomerkörper nach Anspruch 10 einstückig auf dem balligen Bereich des Lagerinnenteils aufvulkanisiert sein.

Alternativ dazu wird nach Anspruch 11 zur Vereinfachung der Montage und Herstellung des Elastomerkörpers, insbesondere auch in Verbindung mit den Doppelkonusbereichen vorgeschlagen, zwei aufsteckbare Elastomerlagerschalen zu verwenden, wobei der Elastomerkörper in der axialen Längsmittenebene geteilt ist.

Das Innenteil kann je nach den Gegebenheiten nach Anspruch 12 kugelförmig mit beidseitigen Anschlusspratzen ausgeführt sein.

Bei einer besonders bevorzugten Ausführungsform nach Anspruch 13 ist das Innenteil etwa scheibenförmig gestaltet mit Kantenrundungen, wobei beidseitig von den Scheibenflächen Anschlusspratzen abstehen. Bevorzugt ist das Verhältnis zwischen Scheibendicke und Scheibendurchmesser in einem Verhältnis von etwa 3 : 8 gewählt.

Nach Anspruch 14 sind die elastischen Seitenbereiche des Elastomerkörpers und die Bereiche der Kantenrundungen axial etwa gleich lang und überdecken sich etwa zur Hälfte in axialer Richtung. Eine solche Auslegung führt zu einer Verlängerung der Lebensdauer.

Nach Anspruch 15 können zur Vergleichmäßigung der Elastomerspannungen im Elastomerkörper bzw. den Elastomerlagerschalen Zwischenbleche eingeformt sein. Dies ist insbesondere auch im Bereich der Anlageflächen zum Lagerinnenteil hin zweckmäßig, wobei hier in einer weiteren Ausgestaltung die Zwischenbleche einen zur Lageraußenseite abstehenden zylindrischen Kragen aufweisen können, mit dem sie formschlüssig einen jeweils zylindrischen Seitenfortsatz des Lagerinnenteils umgreifen können. An einen solchen Seitenfortsatz schließt sich dann jeweils eine Befestigungspratze an.

In einer besonders bevorzugten Ausführungsform nach Anspruch 16 sind vier solche Gelenklager Bestandteile eines 4-Punkt-Lenkers, der einen Fahrzeugaufbau eines Nutzfahrzeugs mit einer Fahrzeugachse verbindet. Dabei sind an den vier Eckpunkten des 4-Punkt-Lenkers jeweils metallische Gehäuse als Aufnahmeaugen mit horizontal und in Fahrzeugquerrichtung liegenden Lagerachsen angebracht. Die zugeordneten Lagerinnenteile sind mit jeweils zwei Lagerpunkten am Fahrzeugaufbau und entsprechend an einer Achse anschließbar, wobei jeweils in einem Gelenklager zwei in Horizontalrichtung gegenüberliegende Umfangsteilbereiche mit ausgenommenen Doppelkonusformen angebracht sind. Dies bewirkt, dass bei zur Fahrtrichtung quer liegenden Lagerachsen in Vertikalrichtung eine relativ starre Anbindung mit guten Trageigenschaften erfolgt. In Fahrtrichtung erfolgt dagegen bei geringen Lagerauslenkungen eine vorzugsweise relativ weiche Abstützung zur Verbesserung der Fahrzeugakustik und des Fahrkomforts, die jedoch progressiv bei stärkeren Lagerbelastungen in dieser Richtung für eine Ausreichende Abstützung und Kraftübertragung progressiv ansteigt.

Anhand einer Zeichnung werden Ausführungsformen der Erfindung näher erläutert.

Es zeigen:
- Fig. 1: einen Längsschnitt durch eine Elastomerlagerschale als Schalenhälfte eines Elastomerkörpers eines Gelenklagers,
- Fig. 2: ein metallisches, balliges Lagerinnenteil mit geschnittenen, beidseitig aufgesetzten Elastomerlagerschalen, entsprechend der Schnittlinie A-A aus Fig. 4,
- Fig. 3: eine Ansicht entsprechend Fig. 2 entlang der Schnittlinie B-B aus Fig. 4,
- Fig. 4: einen Querschnitt durch ein fertig montiertes Gelenklager entlang der Schnittlinie C-C aus den Fig. 5 und 6, bei dem der Gegenstand nach den Fig. 2 und Fig. 3 in ein metallisches Gehäuse als Aufnahmeauge unter Vorspannung eingesetzt ist,
- Fig. 5: einen Längsschnitt durch ein fertig montiertes Gelenklager entlang der Schnittlinie A-A aus Fig. 4,
- Fig. 6: einen Längsschnitt entsprechend Fig. 5 entlang der Schnittlinie B-B aus Fig. 4,

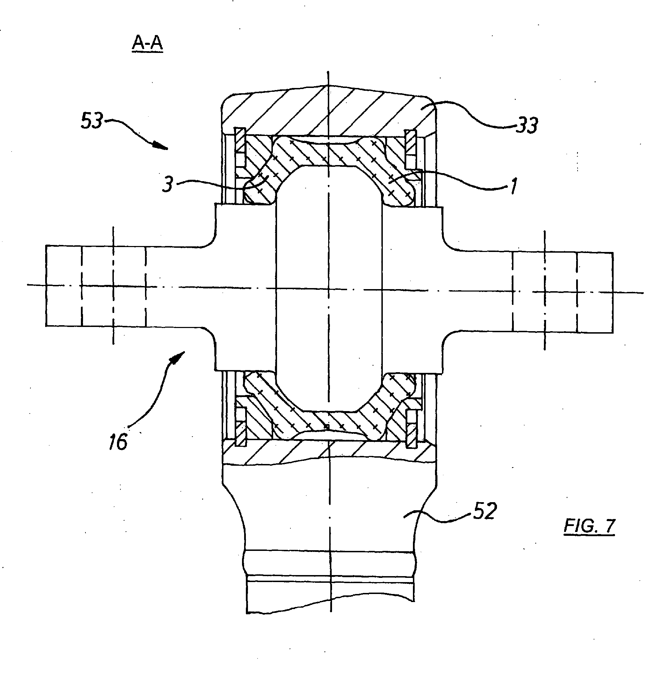

- Fig. 7: eine Ausführungsform mit einem alternativen Elsastomerkörper im Längsschnitt entsprechend der Schnittlinie A-A aus Fig. 4, und

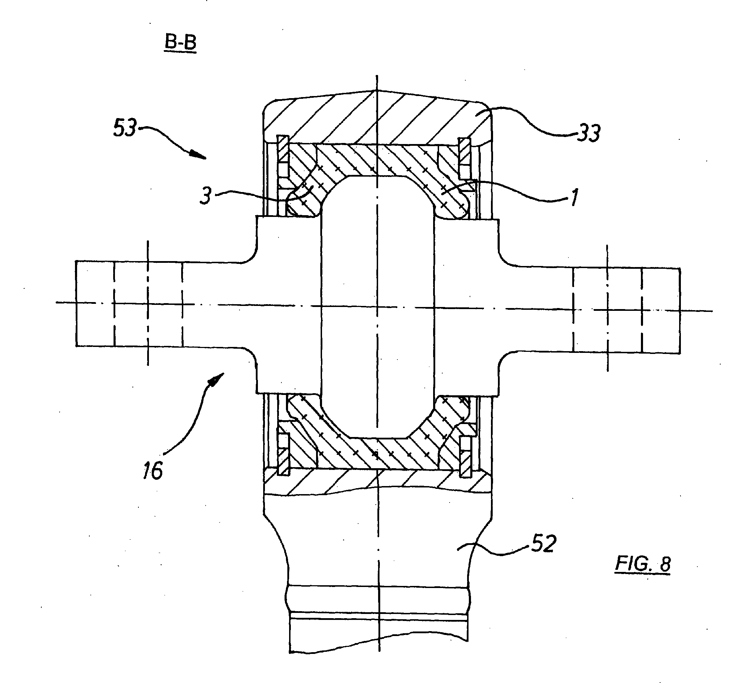

- Fig. 8: einen Längsschnitt entsprechend Fig. 7 entlang einer Schnittlinie B-B.

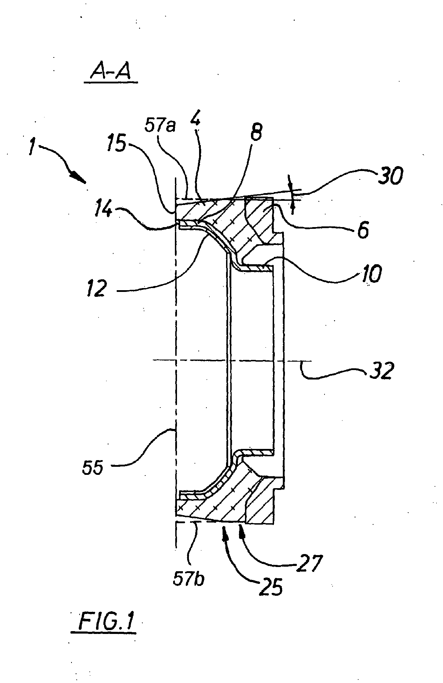

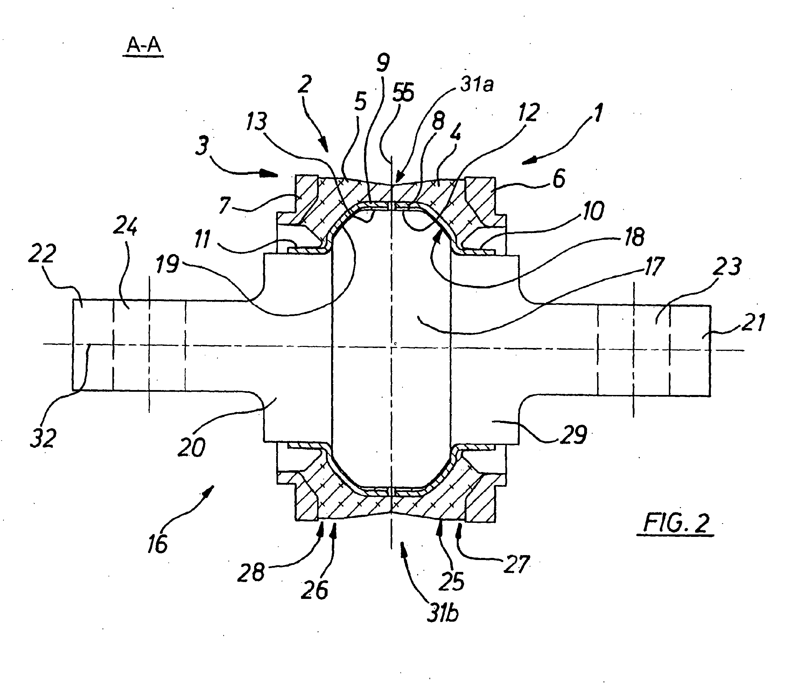

In Fig. 1 ist eine Elastomerlagerschale 1 dargestellt als Schalenhälfte eines Elastomerkörpers 2, der insgesamt zusammen mit einer weiteren Elastomerlagerschale 3 aus Fig. 2 ersichtlich ist. Die Elastomerlagerschalen 1, 3 weisen jeweils ein Gummiteil 4, 5 auf, an dessen axialer Außenseite jeweils Stützringe 6, 7 anvulkanisiert sind. An der Lagerschaleninnenseite sind jeweils Zwischenbleche 8, 9 eingeformt, die zur Lagerschalenaußenseite mit einem zylindrischen Kragen 10, 11 abstehen. An der Schaleninnenseite sind die Zwischenbleche 8, 9 jeweils mit einem dünnen Gummifilm 12, 13 versehen. Der lagerinnenseitige Rand 14 der Zwischenbleche 8, 9 ist jeweils gegenüber dem lagerinnenseitigen Rand 15 der Gummiteile 4, 5 axial zurückversetzt.

In Fig. 2 sind die beiden Elastomerlagerschalen 1, 3 auf ein metallisches, balliges Lagerinnenteil 16 aufgesteckt. Der ballige Bereich ist hier als Scheibe 17 mit Kantenrundungen 18, 19 ausgeführt. An die Scheibenflächen schließen sich jeweils in Axialrichtung abstehend zylindrische Seitenfortsätze 29, 20 an, die anschließend in Anschlussatzen 21, 22 mit Anschlussbohrungen 23, 24 übergehen. Auf die zylindrischen Seitenfortsätze 29, 20 sind die Elastomerlagerschalen 1, 3 mit den zylindrischen Krägen 10, 11 der Zwischenbleche 8, 9 formschlüssig aufgesteckt.

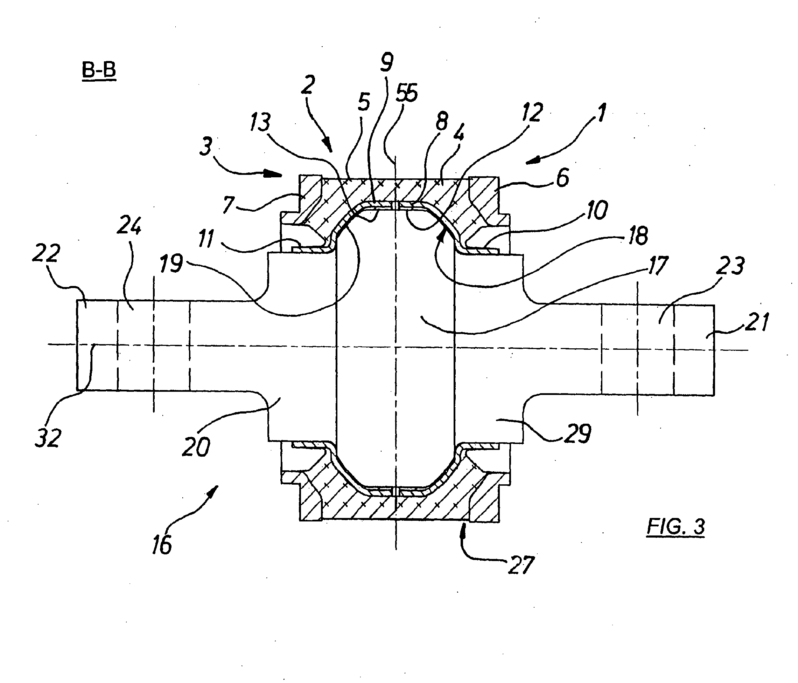

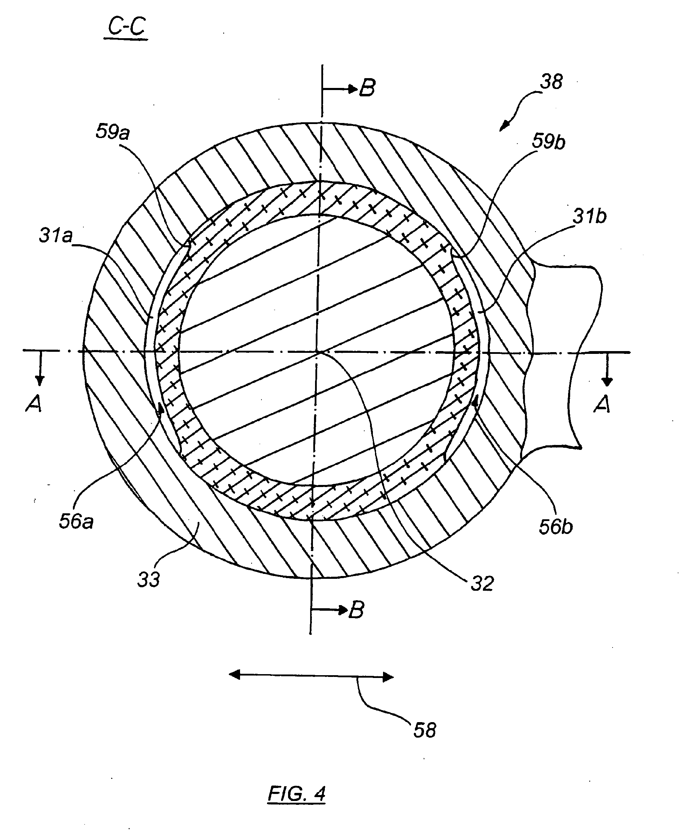

Wie aus den Fig. 1 bis 4 ersichtlich ist, weist die Umfangsfläche des Elastomerkörpers 2 aus den aufgesteckten Elastomerlagerschalen 1, 3 im nicht vorgespannten Zustand bis auf die weiter unten erläuterten Umfangsteilbereiche 56a, 56b insgesamt eine Zylinderform auf. Diese umfängliche Zylinderform hat ein Untermaß gegenüber den zugeordneten Stützringen 6, 7, so dass jeweils eine umlaufende Stufe 27, 28 zwischen dem jeweiligen Stützring 6, 7 und der anschließenden Zylinderform der Gummiteile 4, 5 gebildet ist. Insbesondere ist die umfängliche Zylinderform in Fig. 1 mit den strichlierten Linien 57a, 57b und im Längsschnitt der Fig. 3 angedeutet, die einem Schnitt entlang B-B aus dem (bereits fertig montierten) Gelenklager 38 nach Fig. 4 entsprechen.

In den ebenfalls aus Fig. 4 sowie den Fig. 1 und 2 ersichtlichen gegenüberliegenden beiden Umfangsteilbereichen 56a, 56b ist jeweils eine partielle Elastomerausnehmung dergestalt angebracht, dass die Zylinderform jeweils nur am axial seitlichen Zylinderformen 25, 26 ausgebildet ist und in einer Verjüngung zur axialen Lagermitte 55 hin jeweils eine Doppelkonusform 31 a, 31 b mit einem Konuswinkel 30 ausgebildet ist. Diese Doppelkonusformen 31 a und 31 b sind im konkreten Ausführungsbeispiel nach Fig. 4 etwa an einem Umfangsbereich entsprechend einem Radialwinkel von 80° ausgebildet. Zudem ist aus Fig. 4 zu ersehen, dass die Doppelkonusform 31 a, 31 b in Umfangsrichtung jeweils mit einer flachen Übergangskontur 59a, 59b in die anschließende Zylinderform übergeht.

Aus Fig. 2 ist zudem ersichtlich, dass die axiale Erstreckung (Projektion auf die Lagerachse 32) der Kantenrundungen 18, 19 und der Zylinderformbereiche 25, 26 etwa gleich lang sind, wobei die Zylinderformbereiche 25, 26 die Kantenrundungen 18, 19 axial etwa zur Hälfte überdecken. Aus Fig. 4 ist auch der zylindrische Umfang des Elastomerkörpers 2 im Bereich ohne Doppelkonusform ersichtlich.

In den Fig. 4, 5, 6 ist der Gegenstand nach den Fig. 2, 3 mit den Elastomerlagerschalen 1, 3 in ein metallisches Gehäuse als Aufnahmeauge 33 mit zylindrischem Innenraum eingesetzt. Die Stützringe 6, 7 sind zur Lagermitte 55 hin axial vorgespannt und durch Federringe 34, 35 in Nuten 36, 37 an der Innenfläche des Aufnahmeauges 33 gehalten.

Die Vorspannung und der Innendurchmesser des Aufnahmeauges 33 sind dabei so gewählt, dass im dargestellten, nicht eingefederten Zustand des fertig montierten Gelenklagers 38 der Elastomerkörper 2 an der Innenfläche des Aufnahmeauges 33 anliegt und im Bereich der Doppelkonusformen 31 a, 31 b seitliche Gummiwülste 39, 40 gebildet sind. Wegen der Stufen 27, 28 wird dabei das Gummimaterial der Gummiteile 4, 5 nicht in die Eckrandbereiche gepresst, sondern es entstehen dort umlaufende, freie Spalte 41, 42. Ebenso ist in den Bereichen der Doppelkonusformen 31 a, 31 b jeweils ein Spalt 43 zum Aufnahmeauge 33 hin gebildet.

Zwischen den Stützringen 6, 7 und den Krägen 10, 11 besteht jeweils ein Freiraum, in den sich beim Aufbringen der Vorspannung Gummimaterial mit Wülsten 50, 51 ausbreitet.

**Das dargestellte Gelenklager 38 soll beispielsweise als eines von vier Gelenklagern an einem Eckpunkt eines 4-Punkt-Lenkers einer Nutzfahrzeug-Achsführung angeordnet sein und hat dann folgende Funktion:**

Das Lagerinnenteil 16 wird mit den Anschlusspratzen 21, 22 beispielsweise am Fahrzeugaufbau befestigt. Das Aufnahmeauge 33 setzt sich im Achslenker 52 fort. Die Lagerachsen 32 aller vier Gelenklager 38 des 4-Punkt-Lenkers liegen dabei etwa horizontal und quer zur Fahrzeuglängsrichtung (Pfeil 58 in Fig. 4). Die Umfangsteilbereiche 56a, 56b mit den gegenüberliegenden Doppelkonusbereichen 31 a, 31 b liegen in Fahrzeuglängsrichtung 58.

In Vertikalrichtung wirken im wesentlichen die Elastomerkörperteilbereiche ohne Ausnehmungen, so dass eine relativ steife gewünschte Abstützung mit hoher Tragfunktion in Vertikalrichtung vorliegt.

Dagegen wirken bei nur geringfügigen radialen Auslenkungen in Fahrzeuglängsrichtung (Pfeil 58) zwischen dem Lagerinnenteil 16 und dem Aufnahmeauge 33 im wesentlichen nur die Federkennungen in Verbindung mit den umlaufenden Wülsten 39, 40, wobei das Gelenklager 38 relativ weich und geräuscharm ist. Bei einer größeren radialen Auslenkung in Fahrzeuglängsrichtung (Pfeil 58) kommt die entsprechende Doppelkonusform 31 a oder 31 b zur Anlage, wodurch die Druckkomponente im Gummimaterial steigt und das Gelenklager mit progressiv steigender Federkennung, jedoch ohne sprunghafte Veränderung, härter wird. Bei üblichen Fahrbedingungen wird somit ein weiches, geräuscharmes und komfortables Gelenklager 38 zur Verfügung gestellt, das lediglich bei stärkeren Belastungen in Fahrzeuglängsrichtung 58 progressiv härter wird. Die hohe Tragfähigkeit in Vertikalrichtung wird dadurch nicht bzw. nur vernachlässigbar beeinflusst.

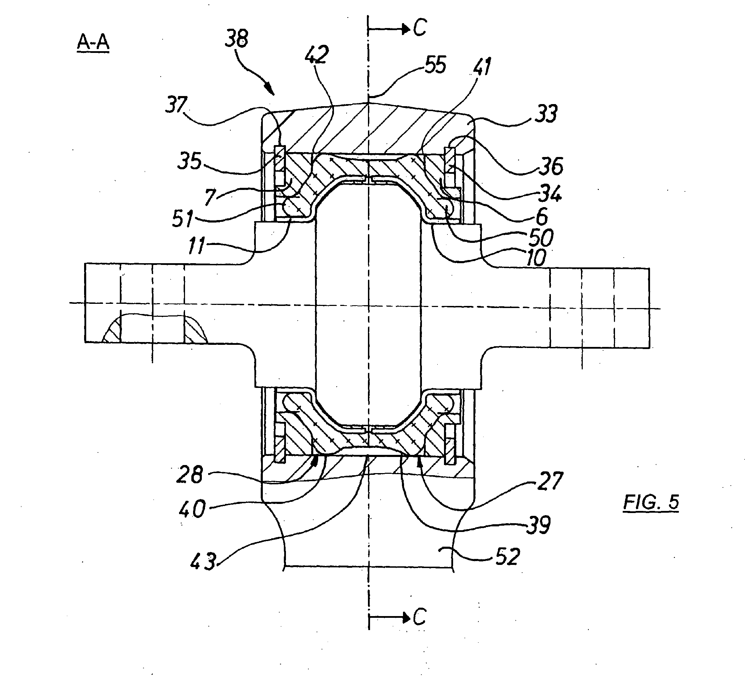

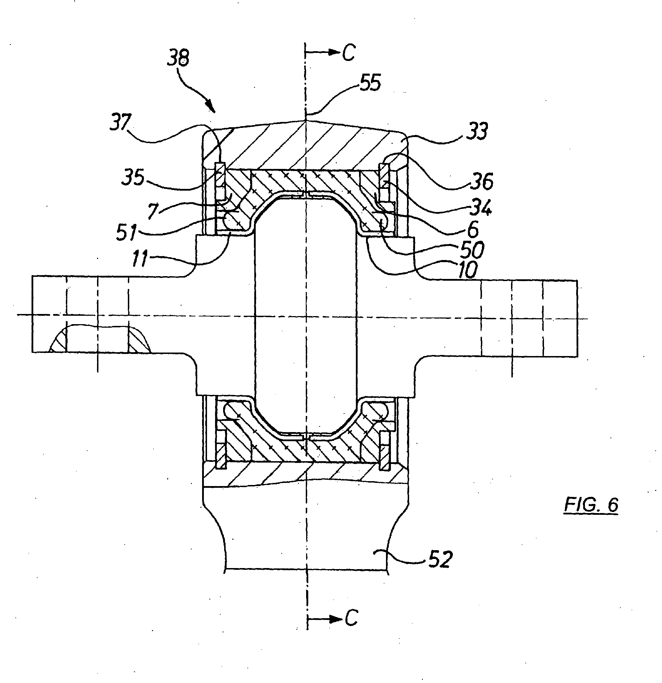

In den Fig. 5 und 6 ist entsprechend den Fig. 2 und 3 eine etwas modifizierte Ausführung eines Gelenklagers 53 dargestellt, bei dem keine Zwischenbleche 8, 9 verwendet sind, was je nach den Gegebenheiten möglich ist und wobei gegebenenfalls der Elastomerkörper 2 einstückig auf das Lagerinnenteil 16 aufvulkanisiert ist. Die übrige Ausgestaltung und Funktion des Gelenklagers 53 entspricht dem Gelenklager 38.

## Patentansprüche

1. Gelenklager, insbesondere zur Lagerung von Achslenkern (52) in Kraftfahrzeugen,
mit einem metallischen, balligen Lagerinnenteil (16) als erstem Lagerteil, mit wenigstens einem abstehendem Lageranschlussteil (21, 22)
mit einem metallischen Gehäuse als zweitem Lagerteil, das einen zylindrischen Innenraum als Aufnahmeauge (33) aufweist, und
mit einem Elastomerkörper (2) zwischen dem Lagerinnenteil (16) und dem Aufnahmeauge (33), der den balligen Bereich (17) des Lagerinnenteils (16) übergreift, wobei der Elastomerkörper (2) axial zwischen beidseitigen Stützringen (6, 7) vorgespannt ist, und die Stützringe (6, 7) einen Außendurchmesser entsprechend dem Innendurchmesser des Aufnahmeauges (33) aufweisen,
**dadurch gekennzeichnet,**
**dass** die im übrigen im nicht vorgespannten Zustand zylindrisch geformte Umfangsfläche des Elastomerkörpers (2) in wenigstens einem Umfangsteilbereich (56a, 56b) eine partielle Elastomerausnehmung aufweist dergestalt, dass dort die Umfangsfläche nur in den beiden axialen Seitenbereichen etwa zylindrisch geformt ist (25, 26) sowie anschließend an diese seitlichen Zylinderformen (25, 26) zur axialen Lagermitte (55) hin verjüngt ist und eine Doppelkonusform (31a, 31 b) bildet, und
**dass** der Elastomerkörper (2), das Lagerinnenteil (16) das Aufnahmeauge (33) und die aufgebrachte Vorspannung so dimensioniert sind, dass im fertig montierten und nicht eingefederten Zustand des Gelenklagers (38; 53) der Elastomerkörper (2) mit der zylindrischen Umfangsfläche und den seitlichen Zylinderformen (25, 26) am Aufnahmeauge (33) vorgespannt anliegt und in Richtung des wenigstens einen Umfangsteilbereichs (56a, 56b) mit der ausgenommenen Doppelkonusform (31a, 31 b) bei geringen Lagerauslenkungen im Vergleich zu anderen Auslenkrichtungen eine relativ weiche Federkennung vorliegt und bei stärkeren Lagerauslenkungen der doppelkonische Bereich (31a, 31b) nach und nach zur Anlage kommt und einen progressiven Anstieg der Federkennung bewirkt.

2. Gelenklager nach Anspruch 1, **dadurch gekennzeichnet, dass** zwei oder mehrere Umfangsteilbereiche (56a, 56b) mit je einer ausgenommenen Doppelkonusform (31a, 31 b) am Umfang versetzt angeordnet sind.

3. Gelenklager nach Anspruch 2, **dadurch gekennzeichnet, dass** zwei Doppelkonusformen (31 a, 31 b) radial gegenüberliegend angeordnet sind.

4. Gelenklager nach einem der Ansprüche 1 bis 3, **dadurch gekennzeichnet, dass** bei zwei oder mehr Doppelkonusformen (31 a, 31 b) deren jeweilige Konusform und deren Umfangslänge gleich sind.

5. Gelenklager nach einem der Ansprüche 1 bis 3, **dadurch gekennzeichnet, dass** bei zwei oder mehr Doppelkonusformen (31 a, 31 b) deren jeweilige Konusform (31 a, 31 b), insbesondere deren Konuswinkel (30) und damit die Ausnehmungstiefe und/oder deren Umfangslänge unterschiedlich sind.

6. Gelenklager nach Anspruch 1 oder Anspruch 2, **dadurch gekennzeichnet, dass** der Konuswinkel (30) der Doppelkonusform (31 a, 31 b) in einem Bereich zwischen 3° und 15° liegt.

7. Gelenklager nach einem der Ansprüche 1 bis 6, **dadurch gekennzeichnet, dass** in Umfangsrichtung die ausgenommene Doppelkonusform (31a, 31 b) mit einer flachen Übergangskontur (59a, 59b), in die anschließende übrige Zylinderform des Elastomerkörpers (2) übergeht.

8. Gelenklager nach einem der Ansprüche 1 bis 7, **dadurch gekennzeichnet, dass** die seitlichen Zylinderformen (25, 26) an dem wenigstens einen ausgenommenen Umfangsteilbereich (56a, 56b) mit einem Untermaß im Durchmesser gegenüber dem Innendurchmesser des Aufnahmeauges (33) bzw. dem Außendurchmesser der Stützringe (6, 7) ausgebildet sind, so dass jeweils eine umlaufende Stufe (27, 28) zwischen einem Stützringumfangsrand und einer Zylinderform (25, 26) gebildet ist, und
dass der Elastomerkörper (2), das Lagerinnenteil (16) das Aufnahmeauge (33) und die aufgebrachte Vorspannung so dimensioniert sind, dass im fertig montierten und nicht eingefederten Zustand des Gelenklagers (38; 53) am zugeordneten Umfangsteilbereich (56a, 56b) zwei gegeneinander axial versetzte und auch gegenüber den axial äußeren Stützringen (6, 7) etwas versetzte, Elastomerwülste (39, 40) in Umfangsrichtung gebildet sind, die am Aufnahmeauge (33) vorgespannt anliegen und dort bei geringen Lagerauslenkungen in dieser Richtung eine relativ weiche Federkennung bewirken und bei stärkeren Lagerauslenkungen der doppelkonische Bereich (31 a, 31 b) nach und nach zur Anlage kommt und dort einen progressiven Anstieg der Federkennung bewirkt.

9. Gelenklager nach Anspruch 8, **dadurch gekennzeichnet, dass** jeweils die umlaufende Stufe (27, 28) zwischen dem Stützringumfangsrand und der angrenzenden Zylindermantelfläche eine geringe Höhe von ca. 1 mm bei üblichen Aufnahmeaugendurchrnesser von ca. 60 mm bis 100 mm aufweist.

10. Gelenklager nach einem der Ansprüche 1 bis 9, **dadurch gekennzeichnet, dass** der Elastomerkörper (2) einstückig auf dem balligen Bereich des Lagerinnenteils (16) aufvulkanisiert ist.

11. Gelenklager nach einem der Ansprüche 1 bis 9, **dadurch gekennzeichnet**, das der Elastomerkörper (2) in der axialen Längsmittenebene (55) in zwei gleiche aufsteckbare Elastomerlagerschalen (1, 3) geteilt ist.

12. Gelenklager nach einem der Ansprüche 1 bis 11, **dadurch gekennzeichnet, dass** das Lagerinnenteil (16) kugelförmig mit beidseitigen Anschlusspratzen ausgebildet ist.

13. Gelenklager nach einem der Ansprüche 1 bis 11, **dadurch gekennzeichnet, dass** das Lagerinnenteil scheibenförmig (17) mit Kantenrundungen (18, 19) ausgeführt ist, wobei beidseitig von den Scheibenflächen Anschlusspratzen (21, 22) abstehen.

14. Gelenklager nach Anspruch 13, **dadurch gekennzeichnet, dass** die zylindrischen Seitenbereiche (25, 26) des Elastomerkörpers (2) und die Bereiche der Kantenrundungen (18, 19) axial etwa gleich lang sind und die zylindrischen Seitenbereiche (25, 26) des Elastomerkörpers (2) die Kanntenrundungen (18, 19) axial etwa zur Hälfte überdecken.

15. Gelenklager nach einem der Ansprüche 1 bis 14, **dadurch gekennzeichnet, dass** im Elastomerkörper (2) bzw. den Elastomerlagerschalen (1, 3), insbesondere im Bereich der Anlagefläche zum Lagerinnenteil (16) Zwischenbleche (8, 9) eingeformt sind.

16. Gelenklager nach einem der Ansprüche 1 bis 15, **dadurch gekennzeichnet, dass** vier solche Gelenklager (38, 53) Bestandteile eines 4-Punkt-Lenkers sind, wobei an dessen Eckpunkten die metallischen Gehäuse als Aufnahmeaugen (33) angebracht sind dergestalt, dass der 4-Punkt-Lenker mit etwa horizontal und in Fahrzeugquerrichtung liegenden Lagerachsen (32) jeweils mit zwei zugeordneten Lagerpunkten am Fahrzeugaufbau und an einer Fahrzeugachse anschließbar ist und jeweils in einem Gelenklager (38, 53) zwei in Fahrzeuglängsrichtung (Pfeil 58) gegenüberliegende Umfangsteilbereiche (56a, 56b) mit ausgenommenen Doppelkonusformen (31 a, 31 b) angebracht sind.

## Claims

1. Pivot bearing, in particular for mounting axle guides (52) in motor vehicles,
having a metallic, spherical bearing inner part (16) as a first bearing part, having at least one protruding bearing connecting part (21, 22),
having a metallic housing as a second bearing part which has a cylindrical inner space as a receiving socket (33), and
having an elastomer element (2) between the bearing inner part (16) and the receiving socket (33) which engages over the spherical region (17) of the bearing inner part (16), the elastomer element (2) being prestressed axially between supporting rings (6, 7) on both sides, and the supporting rings (6, 7) having an external diameter corresponding to the internal diameter of the receiving socket (33),
**characterized in that that** circumferential face of the elastomer element (2) which is otherwise shaped cylindrically in the non-prestressed state has a partial elastomer recess in at least one circumferential part region (56a, 56b) in such a way that the circumferential face is shaped approximately cylindrically (25, 26) only in the two axial side regions and is tapered towards the axial bearing centre (55) adjacent to the said lateral cylinder shapes (25, 26) and forms a double cone shape (31a, 31b), and
**in that** the elastomer element (2), the bearing inner part (16), the receiving socket (33) and the applied prestress are dimensioned in such a way that, in the finally mounted and non-compressed state of the pivot bearing (38; 53), the elastomer element (2) bears in a prestressed state with the cylindrical circumferential face and the lateral cylinder shapes (25, 26) against the receiving socket (33), and a relatively soft spring characteristic is present in the direction of the at least one circumferential part region (56a, 56b) with the recessed double cone shape (31a, 31b) in the case of low bearing deflections in comparison with other deflection directions, and the double cone region (31a, 31b) gradually comes into contact in the case of more pronounced bearing deflections and brings about a progressive increase in the spring characteristic.

2. Pivot bearing according to Claim 1, **characterized in that** two or more circumferential part regions (56a, 56b) are arranged offset with in each case one recessed double cone shape (31a, 31b) at the circumference.

3. Pivot bearing according to Claim 2, **characterized in that** two double cone shapes (31a, 31b) are arranged so as to lie radially opposite one another.

4. Pivot bearing according to one of Claims 1 to 3, **characterized in that**, in the case of two or more double cone shapes (31a, 31b), their respective cone shape and their circumferential length are identical.

5. Pivot bearing according to one of Claims 1 to 3, **characterized in that**, in the case of two or more double cone shapes (31a, 31b), their respective cone shape (31a, 31b), in particular their cone angle (30) and therefore the recess depth and/or their circumferential length are different.

6. Pivot bearing according to Claim 1 or Claim 2, **characterized in that** the cone angle (30) of the double cone shape (31a, 31b) lies in a range between 3° and 15°.

7. Pivot bearing according to one of Claims 1 to 6, **characterized in that**, in the circumferential direction, the recessed double cone shape (31a, 31b) merges with a flat transition contour (59a, 59b) into the adjoining remaining cylinder shape of the elastomer element (2).

8. Pivot bearing according to one of Claims 1 to 7, **characterized in that** the lateral cylinder shapes (25, 26) are configured at the at least one recessed circumferential part region (56a, 56b) with an undersize in diameter in comparison with the internal diameter of the receiving socket (33) or the external diameter of the supporting rings (6, 7), with the result that in each case one circumferential step (27, 28) is formed between a supporting-ring circumferential edge and a cylinder shape (25, 26), and
**in that** the elastomer element (2), the bearing inner part (16), the receiving socket (33) and the applied prestress are dimensioned in such a way that, in the finally mounted and non-compressed state of the pivot bearing (38; 53), two elastomer beads (39, 40) which are offset axially with respect to one another and are also offset somewhat with respect to the axially outer supporting rings (6, 7) are formed in the circumferential direction on the associated circumferential part region (56a, 56b), which elastomer beads (39, 40) bear against the receiving socket (33) in a prestressed manner and, in the case of low bearing deflections, bring about a relatively soft spring characteristic in this direction, and the double cone region (31a, 31b) gradually comes into contact in the case of more pronounced bearing deflections and brings about a progressive increase in the spring characteristic there.

9. Pivot bearing according to Claim 8, **characterized in that** in each case the circumferential step (27, 28) between the supporting-ring circumferential edge and the adjoining cylinder shell face has a low height of approximately 1 mm with usual receiving-socket diameters of from approximately 60 mm to 100 mm.

10. Pivot bearing according to one of Claims 1 to 9, **characterized in that** the elastomer element (2) is vulcanized integrally onto the spherical region of the bearing inner part (16).

11. Pivot bearing according to one of Claims 1 to 9, **characterized in that** the elastomer element (2) is divided in the axial longitudinal centre plane (55) into two identical elastomer bearing shells (1, 3) which can be plugged on.

12. Pivot bearing according to one of Claims 1 to 11, **characterized in that** the bearing inner part (16) is of spherical configuration with connecting claws on both sides.

13. Pivot bearing according to one of Claims 1 to 11, **characterized in that** the bearing inner part is of disc-shaped (17) configuration with edge rounded portions (18, 19), connecting claws (21, 22) protruding on both sides from the disc faces.

14. Pivot bearing according to Claim 13, **characterized in that** the cylindrical side regions (25, 26) of the elastomer element (2) and the regions of the edge rounded portions (18, 19) are approximately identically long axially and the cylindrical side regions (25, 26) of the elastomer element (2) cover the edge rounded portions (18, 19) axially approximately halfway.

15. Pivot bearing according to one of Claims 1 to 14, **characterized in that** intermediate plates (8, 9) are formed in the elastomer element (2) or the elastomer bearing shells (1, 3), in particular in the region of the bearing face with respect to the bearing inner part (16).

16. Pivot bearing according to one of Claims 1 to 15, **characterized in that** four pivot bearings (38, 53) of this type are constituent parts of a four-point link, the metallic housings being applied to its corner points as receiving sockets (33) in such a way that the four-point link can be connected to the vehicle body and to a vehicle axle by way of bearing axles (32) which lie approximately horizontally and in the vehicle transverse direction and have in each case two associated bearing points, and two circumferential part regions (56a, 56b) which lie opposite in the vehicle longitudinal direction (arrow 58) and have recessed double cone shapes (31a, 31b) are attached in each case in a pivot bearing (38, 53).

## Revendications

1. Palier à rotule, en particulier pour le montage de guides d'essieu (52) dans des véhicules automobiles,
avec une partie intérieure de palier (16) bombée, métallique en tant que première partie de palier, avec au moins une partie de raccordement de palier (21, 22) en saillie
avec un boîtier métallique en tant que seconde partie de palier qui présente un espace intérieur cylindrique servant d'oeil de réception (33), et
avec un corps en élastomère (2) entre la partie intérieure de palier (16) et l'oeil de réception (33) qui recouvre la zone (17) bombée de la partie intérieure de palier (16), le corps en élastomère (2) étant précontraint axialement entre des bagues d'appui (6, 7) des deux côtés, et les bagues d'appui (6, 7) présentant un diamètre extérieur correspondant au diamètre intérieur de l'oeil de réception (33),
**caractérisé en ce que**
la surface périphérique du corps en élastomère (2), formée du reste de manière cylindrique à l'état non précontraint présente dans au moins une zone partielle périphérique (56a, 56b) un évidement en élastomère partiel de telle manière que la surface périphérique y est formée de manière à peu près cylindrique uniquement dans les deux zones latérales axiales (25,26) ainsi qu'est rétrécie suite à ces formes cylindriques (25, 26) latérales vers le milieu du palier (55) axial et forme une forme biconique (31a, 31b), et
**en ce que** le corps en élastomère (2), la partie intérieure de palier (16), l'oeil de réception (33) et la précontrainte appliquée sont dimensionnés de telle sorte qu'à l'état de montage final et non comprimé du palier à rotule (38 ; 53), le corps en élastomère (2) repose précontraint avec la surface périphérique cylindrique et les formes cylindriques (25, 26) latérales sur l'oeil de réception (33) et une caractéristique de flexibilité relativement souple est présente en direction de l'au moins une zone partielle périphérique (56a, 56b) avec la forme biconique (31a, 31b) évidée en cas de faibles déformations de palier par rapport à d'autres directions de déformation et en cas de déviations de palier plus fortes, la zone biconique (31a, 31b) vient en appui progressivement et provoque une augmentation progressive de la caractéristique de flexibilité.

2. Palier à rotule selon la revendication 1, **caractérisé en ce que** deux ou plusieurs zones partielles périphériques (56a, 56b) sont disposées décalées sur la périphérie avec chacune une forme biconique (31a, 31b) évidée.

3. Palier à rotule selon la revendication 2, **caractérisé en ce que** deux formes biconiques (31a, 31b) sont disposées de manière radialement opposée.

4. Palier à rotule selon l'une quelconque des revendications 1 à 3, **caractérisé en ce qu'**en cas de deux formes biconiques (31a, 31b) ou plus, leur forme conique respective et leur longueur périphérique sont identiques.

5. Palier à rotule selon l'une quelconque des revendications 1 à 3, **caractérisé en ce qu'**en cas de deux formes biconiques (31a, 31b) ou plus, leur forme conique (31a, 31b) respective, en particulier leur angle conique (30) et ainsi la profondeur de l'évidement et/ou leur longueur périphérique sont différents.

6. Palier à rotule selon la revendication 1 ou 2, **caractérisé en ce que** l'angle conique (30) de la forme biconique (31a, 31b) se trouve dans une plage comprise entre 3 et 15 °.

7. Palier à rotule selon l'une quelconque des revendications 1 à 6, **caractérisé en ce que** la forme biconique (31a, 31b) évidée avec un contour de transition (59a, 59b) plat passe, dans le sens périphérique, à la forme cylindrique restante contigüe du corps en élastomère (2).

8. Palier à rotule selon l'une quelconque des revendications 1 à 7, **caractérisé en ce que** les formes cylindriques (25, 26) latérales sont réalisées sur l'au moins une zone partielle périphérique (56a, 56b) évidée avec une dimension inférieure en diamètre par rapport au diamètre intérieur de l'oeil de réception (33) ou du diamètre extérieur des bagues d'appui (6, 7) de sorte que respectivement un étage (27, 28) périphérique entre un bord périphérique de bague d'appui et une forme cylindrique (25, 26) soit formé, et
**en ce que** le corps en élastomère (2), la partie intérieure de palier (16), l'oeil de réception (33) et la précontrainte appliquée sont dimensionnés de sorte qu'à l'état de montage final et non comprimé du palier à rotule (38 ; 53) sur la zone partielle périphérique (56a, 56b) associée soient formés deux bourrelets en élastomère (39, 40) décalés axialement l'un par rapport à l'autre et également un peu décalés par rapport aux bagues d'appui (6, 7) axialement extérieures dans le sens périphérique, qui reposent précontraints sur l'oeil de réception (33) et y entraînent en cas de faibles déformations de palier dans cette direction une caractéristique de flexibilité relativement souple et en cas de déformations de palier plus fortes, la zone (31a, 31b) biconique vient en appui progressivement et y provoque une augmentation progressive de la caractéristique de flexibilité.

9. Palier à rotule selon la revendication 8, **caractérisé en ce que** respectivement l'étage (27, 28) périphérique entre le bord périphérique de bague d'appui et la surface d'enveloppe cylindrique contigüe présente une faible hauteur d'environ 1 mm pour un diamètre d'oeil de réception compris entre environ 60 et 100 mm.

10. Palier à rotule selon l'une quelconque des revendications 1 à 9, **caractérisé en ce que** le corps en élastomère (2) est vulcanisé d'un seul tenant sur la zone bombée de la partie intérieure de palier (16).

11. Palier à rotule selon l'une quelconque des revendications 1 à 9, **caractérisé en ce que** le corps en élastomère (2) est divisé dans le plan médian longitudinal (55) axial en deux coques de palier en élastomère (1, 3) identiques pouvant être emboîtées.

12. Palier à rotule selon l'une quelconque des revendications 1 à 11, **caractérisé en ce que** la partie intérieure de palier (16) est réalisée de manière sphérique avec des griffes de raccordement bilatérales.

13. Palier à rotule selon l'une quelconque des revendications 1 à 11, **caractérisé en ce que** la partie intérieure de palier est réalisée en forme de disque (17) avec des bords arrondis (18, 19), des griffes de raccordement (21, 22) faisant saillie de part et d'autre des surfaces discoïdales.

14. Palier à rotule selon la revendication 13, **caractérisé en ce que** les zones latérales (25, 26) cylindriques du corps en élastomère (2) et les zones des bords arrondis (18, 19) sont axialement à peu près de même longueur et les zones latérales (25, 26) cylindriques du corps en élastomère (2) recouvrent axialement à peu près pour moitié les bords arrondis (18, 19).

15. Palier à rotule selon l'une quelconque des revendications 1 à 14, **caractérisé en ce que**, dans le corps en élastomère (2) ou les coques de palier en élastomère (1, 3) en particulier dans la zone de la surface d'appui à la partie intérieure de palier (16) sont formées des tôles intermédiaires (8, 9).

16. Palier à rotule selon l'une quelconque des revendications 1 à 15, **caractérisé en ce que** quatre paliers à rotule de la sorte (38, 53) font partie d'un guide à quatre points, au niveau des coins duquel les boîtiers métalliques sont montés comme des yeux de réception (33) de manière que le guide à quatre points avec des axes de palier se trouvant à peu près horizontaux et dans le sens transversal du véhicule puisse être raccordé respectivement avec deux points de palier associés à la carrosserie du véhicule et à un essieu de véhicule et respectivement dans un palier à rotule (38, 53) sont montées deux zones partielles périphériques (56a, 56b) se faisant face dans le sens longitudinal du véhicule (flèche 58) avec des formes biconiques (31a, 31b) évidées.
